# EUROPÄISCHE PATENTSCHRIFT

(11) **EP 1 206 394 B1**
(45) Veröffentlichungstag und Bekanntmachung des Hinweises auf die Patenterteilung: **17.03.2004**
(21) Anmeldenummer: 00969244.3
(22) Anmeldetag: 23.08.2000
(51) Int. Cl.: B65D 23/08, B29C 67/24

(54) **VERSCHLIESS BARER GLASBEHÄLTER MIT EINEM UMSPRITZTEN KUNSTSTOFFÜBERZUG UND VERFAHREN ZU SEINER HERSTELLUNG**
CLOSEABLE GLASS CONTAINER COMPRISING A PLASTIC COATING APPLIED BY INJECTION MOLDING AND METHOD FOR THE PRODUCTION THEREOF
CONTENANT EN VERRE POUVANT ETRE FERME ET DOTE D'UN ENROBAGE PLASTIQUE REALISE PAR EXTRUSION ET SON PROCEDE DE PRODUCTION

(30) Priorität: 27.08.1999 DE 19940706
(43) Veröffentlichungstag der Anmeldung: 22.05.2002
(73) Patentinhaber: Schott Glas, 55122 Mainz (DE); CARL-ZEISS-STIFTUNG trading as SCHOTT GLAS, 55122 Mainz (DE)
(72) Erfinder: SOMMER, Martin, 55437 Ockenheim (DE); FABIAN, Artur, 55131 Mainz (DE); BORENS, Manfred, 55286 Wörrstadt (DE); HEINZ, Jochen, 55578 Vendersheim (DE); SPALLEK, Michael, 55218 Ingelheim (DE)
(74) Vertreter: Fuchs Mehler Weiss & Fritzsche
(86) Internationale Anmeldenummer: PCT/EP2000/008224
(87) Internationale Veröffentlichungsnummer: WO 2001/015984

(56) Entgegenhaltungen:
- EP-A- 0 549 095
- EP-A- 0 780 315
- DE-A- 19 632 664
- US-A- 3 877 969

## Beschreibung

Die Erfindung bezieht sich auf einen verschließbaren Glasbehälter, mit einem umspritzten Kunststoffüberzug gemäß den Merkmalen des Oberbegriffes des Anspruches 1.

Die Erfindung bezieht sich ferner auf ein Verfahren zur Herstellung des umspritzten Behälters.

Derartige umspritzte Glasbehälter werden insbesondere für medizinische Zwecke verwendet, finden aber auch für kosmetische Zwecke oder zum Aufbewahren von Nahrungsmitteln und Getränken Anwendung. Durch diese Kunststoffüberzüge soll z.B. erreicht werden, daß Glasbruchstücke zusammengehalten werden, falls der überzogene Glasbehälter zu Bruch geht. Der Kunststoff-Überzug dient damit auch als Berst- und/oder Splitterschutz.

Glasbehältnisse verschiedener Gattung mit einem Kunststoff-Überzug, der auf unterschiedliche Weise mit den unterschiedlichsten Kunststoffen aufgebracht wird, sind durch zahlreiche Druckschriften bekanntgeworden.

Durch die DE-OS 24 31 952 ist es bekannt, Glasflaschen mit einem Kunststoff zu beschichten, der aus einem duroplastischen Harz besteht, der vor seiner Anwendung weichgemacht wird, entweder durch innere Weichmacher, d.h. durch Stoffe, die während der Herstellung des duroplastischen Kunststoffes mitreagieren und dadurch zum Bestandteil des Harzes werden, oder durch äußere Weichmacher, die dem fertigen Harz in geeigneter Weise zugemischt werden. Das weichgemachte duroplastische Harz liegt als Beschichtungspulver vor, wird auf eine vorgegebene Korngröße gemahlen und danach elektrostatisch auf die Flaschen aufgetragen. Das Aufbringen des Pulvers kann auch durch Tauchen in ein Wirbelbett bzw. in ein elektrostatisches Wirbelbett erfolgen. Die aufgebrachte Schicht wird dann ausgehärtet, vorzugsweise in einem Infrarot-Ofen. In diesem bekannten Fall erfolgt daher die Beschichtung der Flaschen durch die Methode der Pulverbeschichtung auf Duroplastbasis, die keine exakten Kontur der umspritzten Flaschen erlaubt, wie es z.B. bei der Formung des Bodenteils im Hinblick auf die Standfestigkeit der Glasflasche notwendig ist, und die auch relativ aufwendig ist.

Das weichgemachte duroplastische Harz ist ferner nicht durch die Technik des Spritzgießens auf die Glasflaschen aufbringbar, da bei dieser Technik eine Kunststoff-Formmasse vorliegen muß, die unter Wärmeeinwirkung plastisch erweichbar ist, um danach in das Spritzwerkzeug verpreßt werden zu können. Duroplaste sind jedoch definitionsgemäß nicht thermisch plastifizierbar.

Soweit bei den Publikationen zum Stand der Technik Glasbehältnisse konkretisiert sind, werden typischerweise Bierflaschen, Mineralwasserflaschen, Kosmetikbehälter und dergl. genannt. Daneben wird das Prinzip des Umspritzens von Glasbehältern auch bei einer speziellen Gattung von Behältnissen, nämlich verschließbaren medizinischen Behältern, die einem relativ hohen Druck ausgesetzt sind, insbesondere von Druckbehältern, die mit medizinisch wirksamen Substanzen und einem Treibmittel unter Druck befüllbar sind und deren Öffnung mit einem Abgabeorgan, insbesondere Dosierventil, verschließbar ist, angewendet. In Verbindung mit einem Abgabekopf, welcher mit dem Abgabeorgan so zusammenwirkt, daß beim Pressen beider Teile gegeneinander das Abgabeorgan betätigt wird und eine bestimmte Menge der medizinisch wirksamen Substanz als Aerosol aus einer Sprühöffnung austritt, dienen diese Produkte als Applikator für medizinische Anwendungen, insbesondere bei Asthmatikern und anderen Bronchialleiden.

Es ist bekannt, für derartige Applikatoren Druckbehälter aus metallischen Werkstoffen einzusetzen. Der Berst- und/oder Splitterschutz wird bei solchen Druckbehältern durch die diesbezüglich vorteilhaften Eigenschaften des ausgewählten Materials (hohe Zähigkeit, hohe Festigkeit) bewirkt.

Nachteilig an diesen Druckbehältern ist jedoch, daß der nicht transparente Druckbehälter keine visuelle Ermittlung der in ihm noch vorhandenen Restmenge an abzugebender Substanz zuläßt. Dies ist von besonderem Nachteil bei der Verabreichung von Inhalationspräparaten, die vielfach den Charakter einer Notfallmedikation besitzen (z.B. Asthmapräparate). Ohne visuelle Kontrolle besteht die Gefahr, daß der Druckbehälter im Notfall leer ist.

Durch die DE-AS 11 08 383 ist auch ein Druckbehälter in Form von Glasfläschchen bekannt geworden. Das Aufnahmevolumen des Fläschchens kann 5-50 ml betragen. Am oberen Ende des Fläschchens befindet sich die Austrittsöffnung. Diese wird in der Regel durch Einpressen und/oder Aufbördeln des Abgabeorgans auf den Druckbehälter, beispielsweise eines Dosierventils, mit einer nach oben ragenden meist zylindrischen Kanüle, vielfach unter Verwendung einer elastischen Dichtung zwischen Kopf und Dosierventil, verschlossen. Der Druckbehälter ist dabei einem relativ hohen Innendruck ausgesetzt.

Der bekannte Druckbehälter aus Glas ist mit einer aufgesprühten oder getauchten Beschichtung aus einem transparenten Kunststoff belegt, mit Ausnahme des Randes, auf den das Dosierventil aufgecrimpt ist. Diese Beschichtung besteht aus einem flexiblen Weichkunststoff, z.B. PVC, mit hoher Dehnung. Die hohe Dehnung ist wichtig, da im Berstfall des Glasbehälters der hohe Innendruck auf den Weichkunststoff einwirkt. Würde der Weichkunststoff nicht durch eine Verformung der Beschichtung, d.h. durch eine Volumenänderung des Beschichtungsmantels, dem Druck nachgeben können, wäre mit einer plötzlichen Zerstörung des Weichkunststoffes durch chemischen Angriff zu rechnen.

Dieser bekannte Druckbehälter hat an sich den Vorteil, daß er, da sowohl der Druckbehälter aus einem transparenten Material (Glas) besteht als auch die Kunststoff-Umhüllung transparent ist, eine visuelle Ermittlung der Restmenge an abzugebender Substanz ermöglicht.

Nachteilig an dem bekannten Druckbehälter ist jedoch, daß der transparente Druckbehälter aus Glas trotz Beschichtung mit einem Kunststoff im Explosionsfall, z. B. durch unsachgemäße Handhabung, nicht sicher genug ist, da eine Beschichtung im Bereich des Dosierventils nicht erfolgt bzw. generell im Berstfall die Kunststoff-Umhüllung sich ballonartig aufblähen und platzen kann, wodurch Teile des Glasbehälters geschoßartig in die Umgebung geschleudert werden, insbesondere auch das Dosierventil, das sich von dem Rand, auf dem es aufgecrimpt war, lösen kann.

Im Rahmen der Fertigung des endgültigen Druckbehälters wird die Berst- und Splitterschutzschicht aus Kunststoff auf möglichst einfache Weise direkt auf den Glas-Druckbehälter aufgebracht, d.h. nicht durch Tauchen oder Sprühen, indem dieser in einem Spritzgußwerkzeug mit einem extrudierten Kunststoff umgeben wird. Eine derartige Konzeption ist durch die FR 2 631 581 B1 bekanntgeworden. Diese Schrift beschreibt ein Glasfläschchen mit einem verjüngten Halsteil, das unter Druck mit einer als Aerosol versprühbaren Substanz und einem Treibmittel befüllbar ist, dessen Öffnung mit einem Abgabeorgan verschließbar ist und das mit einem Kunststoffüberzug umspritzt ist.
Im bekannten Fall besteht der Glas-Druckbehälter aus einem Fläschchen mit einem zylindrischen Halsteil, wobei die Spritzgußform so konzipiert ist, daß auch das Halsteil bündig mit der Fläschchenöffnung mit dem Kunststoff umspritzt wird. Bei einer derartigen Ausbildung des Halsteiles des Glasfläschchens ist jedoch das sichere Aufbringen des Abgabeorgans, des Dosierventils, nicht unproblematisch. Der Kunststoffüberzug umgibt ferner das Glasfläschchen vollständig. Im Berstfall kann dabei der Überzug sich partiell aufblähen und platzen und somit seine Berst- und Splitterschutzeigenschaft verlieren. Über die Art des Kunststoffmaterials ist weiterhin in der vorgenannten Schrift keine Aussage gemacht; sie wird danach nicht als funktionell wesentlich angesehen.

Ein weiteres Beispiel für die vorgenannte Konzeption ist durch die DE 196 32 664 A1 bekannt geworden. Sie zeigt ein Glasfläschchen mit einem verjüngten Halsteil, das unter Druck mit einer als Aerosol versprühbaren Substanz und einem Treibmittel befüllbar ist, dessen Öffnung mit einem Abgabeorgan verschließbar ist und das mit einem Kunststoffüberzug umspritzt ist, sowie das so ausgebildet ist, daß eine sichere Aufbringung des Abgabeorgans sowie eine Reduzierung der Wandstärke des Glasfläschchens möglich ist und andererseits der Berst- und Splitterschutz gegenüber dem aus der FR-Schrift bekannten Behälter beträchtlich erhöht wird. Dieses bekannte Fläschchen weist dazu folgende Merkmale auf:
- das Halsteil besitzt öffnungsseitig einen wulstartigen Abschlußrand zum mechanischen Aufbringen des Abgabeorgans, der ebenfalls mit dem Kunststoffüberzug umspritzt ist,
- in dem umspritzten Kunststoffüberzug des Glaskörpers sind mehrere lochartige Druckausgleichsöffnungen ausgeformt,
- der Überzug besteht aus einem elastischen Kunststoffmaterial mit ausgeprägt hoher Schwindung und ist auf dem Glasfläschchen aufgeschrumpft.

Durch den wulstartigen Abschlußrand ist eine sichere und dauerhafte mechanische Aufbringung des Abgabeorgans möglich. Da der Kunststoffüberzug auch den Abschlußglasrand mit einschließt, wird das Abgabeorgan auch bei einem Bersten des Glaskörpers noch mechanisch gehalten, was den Berstschutz erhöht. Durch die Druckausgleichsöffnungen wird verhindert, daß sich der Kunststoffüberzug aufblähen und platzen kann, was ebenfalls den Berst- und Splitterschutz beachtlich erhöht.

Im Berstfall können die eingefüllte Substanz und das Treibmittel durch diese Druckausgleichsöffnungen entweichen. Dadurch, daß der Glasbehälterinhalt austreten kann, ist weiterhin die Gefahr eines chemischen Angriffes durch die eingefüllte Substanz auf das Überzugsmaterial beispielsweise durch Spannungsrißkorrosion, und damit die Berstgefahr weiter vermindert.

Durch die Verwendung eines elastischen Kunststoffmaterials mit ausgeprägt hoher Schwindung (Schrumpfung) wurde dabei gefunden, daß die Druckbelastbarkeit des umspritzten Glasfläschchens um ein Vielfaches höherliegt als die Druckbelastbarkeit des reinen Glasfläschchens. Dieser Effekt erlaubt eine dünnere Wandstärke des Glasfläschchens. Die Elastizität des Kunststoffmaterials gleicht dabei den Schrumpf aus.

Von einem derartigen Glasbehälter geht die Erfindung aus.

Im bekannten Fall werden speziell gestaltete Glasfläschchen, sogenannte Glasinlets, im konventionellen Spritzgießverfahren mit einem transparenten Kunststoff ummantelt. Da beim konventionellen Spritzgießen typischerweise als Kunststoffmaterial relativ zähflüssige Thermoplaste verwendet werden, entstehen beim Spritzgießen sehr hohe Einspritzdrücke (ca. 300 bar), die das Glasinlet leicht zerstören können. Durch diese Zerstörung entsteht ein hoher Anteil an Ausschuß. Außerdem wird die Produktivität einer Produktionsanlage stark herabgesetzt. Deswegen sind auch einer Herabsetzung der Wandstärke der Glasinlets Grenzen gesetzt. Entsprechendes gilt für Inlets aus einem thermolabilem Kunststoff, insbesondere einem Thermoplast-Material.

Ferner sind die bekannten umspritzten Glasbehälter nicht durch Autoklavieren mittels Heißdampf bei 121° C für die Dauer von 20 min sterilisierbar. Eine derartige Sterilisationsmethode wird jedoch typischerweise bei Behältern für medizinische Zwecke gefordert.

Der Erfindung liegt die Aufgabe zugrunde, den eingangs bezeichneten verschließbaren Glasbehälter, der mit einem Kunststoffüberzug umspritzt ist, so auszubilden sowie das Verfahren zu seiner Herstellung so zu führen, daß trotz geringer Wandstärke des Glasbehälters der Ausschuß beim Umspritzen beachtlich herabgesetzt werden kann sowie der umspritzte Behälter hohen Temperaturen, z.B. beim Sterilisieren durch Heißdampf, ausgesetzt werden kann.

Die Lösung dieser Aufgabe gelingt hinsichtlich des verschließbaren Glasbehälters erfindungsgemäß dadurch, daß der Kunststoff-Überzug aus mindestens einem reaktiv vernetzenden, thermisch plastifizierbarem Kunststoff besteht und im Wege des Spritzgießens nach der Reaktionsspritzguß-Technik aufgebracht ist.

Hinsichtlich des Verfahrens zur Herstellung dieses Glasbehälters mit einem umspritzten Kunststoffüberzug ausgebildet als Glasfläschchen gelingt die Lösung der Aufgabe gemäß der Erfindung mit den Schritten:
- Herstellen des kompletten Glasfläschchens mit Bodenteil, zylindrischem Mantelteil, verjüngtem Halsteil einschließlich wulstartigem Abschlußrand gemäß konventioneller Glas-Technologie,
- Umspritzen des kompletten Fläschchens in einer Form mit mindestens einem reaktiv vernetzenden thermisch plastifizierbarem Kunststoff mittels des Reaktionsspritzguß-Verfahrens.

Bei dem erfindungsgemäßen Einsatz des Reaktionsspritzguß-Verfahrens (RIM-Verfahren) wird mindestens ein im Vergleich zu Polymeren niedrig viskoser reaktiv vernetzender Kunststoff, z.B. ein Reaktions-Harz in einer Form um das Einlegeteil, den Glasbehälter, bei relativ niedrigen Einspritzdrücken (unter 10 bar) und relativ niedrigen Formtemperaturen eingespritzt.

Da nur ein geringer Einspritzdruck notwendig ist, kann die Wandstärke der Behälter herabgesetzt werden und dennoch der Ausschuß verringert werden. Ferner können die verwendeten reaktiv vernetzenden Kunststoffe höheren Temperaturen als die typischerweise beim konventionellen Spritzgießen eingesetzten Thermoplaste, wie PP, PE, PET, PS, ausgesetzt werden, wodurch die umspritzten Behälter mittels Heißdampf im Autoklaven sterilisierbar sind. Die niedrigen Formtemperaturen erlauben grundsätzlich auch die Verwendung von Inlets aus einem thermolabilen Kunststoff.

Besondere Vorteile werden gemäß einer Ausgestaltung der Erfindung erzielt mit einem Behälter ausgebildet als Glasfläschchen, das unter Druck mit einer als Aerosol versprühbaren Substanz und einem Treibmittel befüllbar ist, das ein verjüngtes Halsteil mit einem öffnungsseitig angeformten wulstartigen Abschlußrand zum mechanischen Anbringen eines Abgabeorgans, mit dem die Öffnung des Glasfläschchens verschließbar ist, besitzt, und das von dem Kunststoffüberzug derart umhüllt ist, daß dieser auch den wulstartigen Abschlußrand umfaßt. Derartige Glasfläschchen kommen in verschiedenen Ausbaustufen in den Handel. In der Grundform wird das Glasfläschchen ohne montiertes Abgabeorgan geliefert. Es ist auch die Lieferform mit aufgebrachtem Abgabeorgan denkbar. Dabei kann das Glasfläschchen sowohl befüllt als auch unbefüllt sein. Alle diese Handelsformen verwenden jedoch das erfindungsgemäße Fläschchen und werden daher vom Schutz erfaßt.

Durch den Einsatz des RIM-Verfahrens läßt sich auch der gesamte Produktionsprozeß zur Herstellung des ummantelten Behälters, der unter Druck mit einer als Aerosol versprühbaren Substanz und einem Treibmittel befüllbar ist (sogenannte Aerosol-Container), vereinfachen. Beispielsweise ergeben sich folgende Möglichkeiten:

Durch die Zufuhr von unterschiedlichen Materialien an unterschiedlichen Stellen der Form kann die Materialhärte im Bereich des Behälterkopfes gezielt erhöht werden, um die Qualität der Vercrimpung mit einem Dosierventil zu verbessern. Die Materialeigenschaften im Mantelbereich des Behälters können für die Funktion "Splitterbindung" optimiert werden.

Mit dem RIM-Verfahren können auch Behälter, die bereits mit einem Ventil verschlossen sind, nachträglich mit einem Kunststoffmantel umgeben werden. Dies wird möglich, weil die Formtemperaturen im RIM-Verfahren sehr viel niedriger sein können als im konventionellen Spritzgußverfahren und im Rahmen des RIM-Verfahrens das Ventil nicht durch zu hohe Temperaturen beschädigt werden kann. Auch sind die mechanischen Kräfte beim Einspritzen kleiner, was ebenfalls die Wahrscheinlichkeit einer Ventilschädigung herabsetzt.

Die Anwendung des RIM-Verfahrens ermöglicht außerdem wegen der niedrigeren mechanischen Belastung während der Ummantelung, den Einsatz dünnerer Glasinlets, deren Wandstärke im Bereich von 0,7 - 1 mm bei Mantelstärken des Kunststoffes im Bereich von 1 - 2 mm liegt, so daß mit diesem Verfahren gezielt Druckgas-Packungen für den Einsatz in Applikations-Devices (bsp. Injektions-Pen-Systemen) hergestellt werden können.

Beim Behälter kann die Dicke des Überzugs über die Behälterhöhe unterschiedlich sein. Der Kunststoffüberzug kann zumindest in Teilen faserverstärkt sein.

Der Behälterüberzug kann über die Behälterhöhe aus unterschiedlichen reaktiv vernetzenden Komponenten bestehen. Weiterhin kann der Kunststoffüberzug über seinem Querschnitt aus reaktiv vernetzenden Kunststoffen bestehen oder so aufgebracht sein, daß die integrale Dichte über den Querschnitt variiert, jeweils mit der dichteren, festen Schicht als Außenfläche.

Auch läßt sich die Beschichtung nach dem RIM-Verfahren wirtschaftlicher durchführen. Zum einen sind schnellere Prozeßzeiten möglich, was den Durchsatz erhöht, zum anderen sind die Formen weniger aufwendig, was auch eine wirtschaftliche Fertigung von kleiner Stückzahl zur Folge hat.

Beim Behälter können in dem umspritzten Kunststoffüberzug mehrere, vorzugsweise lochartige Druckausgleichsöffnungen ausgeformt sein. Diese Druckausgleichsöffnungen können im Mantel des Überzugs des Behälters, vorzugsweise nahe dem Bodenbereich ausgeformt sein. Es ist ferner möglich, daß vier Druckausgleichsöffnungen paarweise gegenüberliegend ausgeformt sind:

Überraschenderweise wurde festgestellt, daß durch den Einsatz von reaktiven Polyurethan-Systemen im RIM-Verfahren eine Vorkonditionierung der Außenfläche des Glasinlets zur Erreichung eines optimalen Splitterschutzes nicht nötig wird.

Beim Einsatz von Thermoplasten, die im konventionellen Spritzgußverfahren aufgebracht werden, muß beispielsweise durch gesonderte Prozeßschritte Sorge getragen werden, daß, wie in der zitierten DE 196 32 664 A1 beschrieben, die Verbindung zwischen Kunststoff und Glasoberfläche nur sehr schwach ist, damit im Fall des Behälterbruches Risse im Glasinlet sich nicht in den Kunststoffmantel hinein fortpflanzen können. Bei der Anwendung von reaktiven Polyuretan-Systemen nach dem RIM-Verfahren ist die splitterbindende Wirkung unabhängig von der Belastbarkeit der Verbindung zwischen Glas und Kunststoffmantel, so daß vorgenannte Prozeßschritte entfallen können.

Im RIM-Verfahren können Bauteile, die mechanisch und thermisch nur gering belastet werden dürfen, umspritzt werden. Hierdurch entstehen weitere Möglichkeiten zur Herstellung von Druckgas-Packungen für Applikationssysteme.

Typischerweise besitzen Aerosol-Container, eine bevorzugte Anwendung des erfindungsgemäßen Behälters, die Gestalt eines Glasfläschchens mit einem Volumen zwischen 5 ml und 125 ml.

Durch Einsatz des RIM-Verfahrens können auch Glasbehälter beschichtet werden, die ein Volumen von mehr als 125 ml bis hin zu 2000 ml haben. Vorzugsweise ist das Behältervolumen im Bereich > 125 ml und ≤ 500 ml.

Dadurch kann erreicht werden, daß auch diese Behälter die Anforderungen der TRG 300 an Druckgaspackungen erfüllen.

Der Behälterboden kann nach außen gewölbt sein.

Durch die erfindungsgemäßen Maßnahmen entsteht die Möglichkeit Gefäße herzustellen, in denen Flüssigkeiten eingeschlossen sicher durch Heißdampf sterilisiert werden können (bei 121° C oder bei 134° C). Bei diesen Sterilisationsbedingungen entstehen in dem verschlossenen Gefäß hohe Drücke, die an sich zur Zerstörung des Gefäßes führen würden. Aktuelle Laborglasflaschen dürfen daher bei einem solchen Sterilisationsprozeß nicht fest verschlossen werden, damit ein Druckausgleich möglich ist. Die im RIM-Verfahren aufgebrachte Kunststoffschale erlaubt es jedoch, das Glasinlet auf Überdruckbeständigkeit hin zu optimieren und sorgt im praktischen Gebrauch für Sicherheit im Fall eines Glasbruches.

Weiterhin lassen sich thermolabile Inlets (bsp. Thermoplaste) beschichten.

Das Reaktionsspritzguß-Verfahren ist an sich bekannt, und wird beispielsweise in dem Buch:
"Saschtiing, Hansjürgen. Kunststoff Taschenbuch, 24. Ausg., Carl Hanser Verlag, München, Wien, 1989, ISBN 3-446-15385-3"
beschrieben, wobei verschiedene Verfahrensvarianten bekannt sind.

Als reaktiv vernetzende Kunststoffe sind insbesondere Polyurethan-, Polyaminund Polyurea-Systeme sowie Reaktionsharze bekannt. Wegen Einzelheiten wird auf das Buch
"Domininghaus, Hans. Die Kunststoffe und ihre Eigenschaften, 4. Auflage, VDI-Verlag GmbH, Düsseldorf, 1992"
verwiesen.

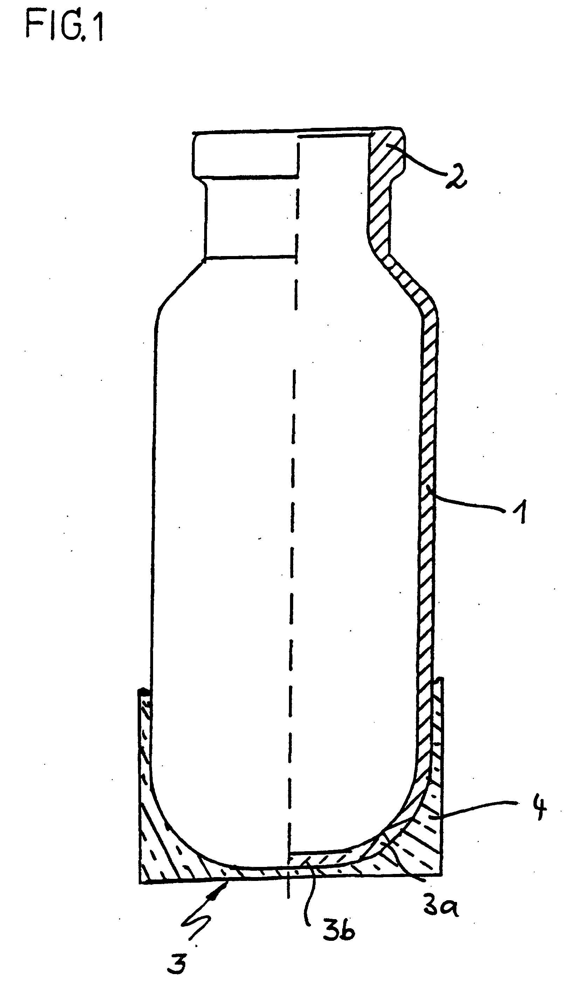

Die beschriebenen umspritzten Glasbehälter, die Glasinlets, werden vorzugsweise im Medizinbereich angewendet. Sie können dabei verschiedene Konfigurationen haben. So zeigt die Fig. 1 in einem Teil-Längsschnitt ein Glasinlet, das mit einer als Aerosol versprühbaren medizinisch wirksamen Substanz befüllbar ist. Am Behältermantel 1 ist eine Ausflußöffnung mit einem Crimprand 2 ausgeformt, auf den ein Dosierventil aufbringbar ist. Der Boden 3 ist im Randbereich 3 a ausgeprägt gewölbt, mit einem relativ kleinflächigen ebenen Mittelteil 3 b.

Auf das Glasinlet ist nach dem Reaktionsspritzguß-Verfahren ein Kunststoffüberzug 4 aufgebracht, der in der Fig. 1 nur z.T., im vergrößerten Maßstab, angedeutet ist. Im Bodenteil 3 ist der Überzug so aufgebracht, daß über den Glasbehälter-Querschnitt eine ebene Stand-Fläche entsteht. Im oberen Teil des Behälters erstreckt sich der Überzug bis auf den Rand 2 der Ausflußöffnung, d.h. schließt den Crimprand 2 mit ein. Wegen der geringeren Formtemperaturen beim Reaktionsspritzguß-Verfahren kann allerdings auch vor dem Aufbringen des Überzuges das Dosierventil auf den Crimprand 2 aufgesetzt werden und erst danach der Überzug aufgebracht werden.

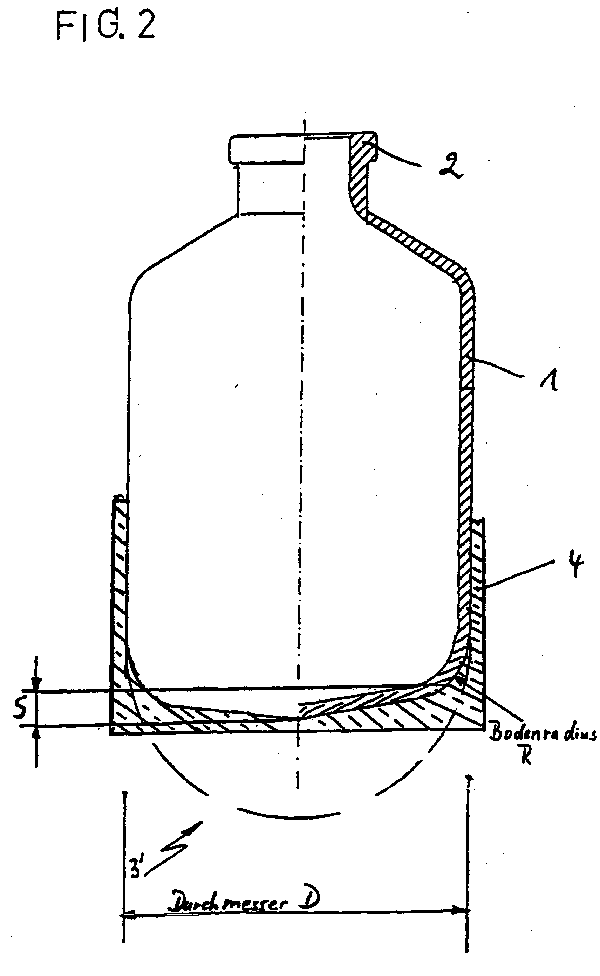

Vorzugsweise sind jedoch die Glasinlets entsprechend Fig. 2 mit einem vollständig nach außen gewölbten Boden 3' versehen, weil sie dann höheren Innen-Drücken widerstehen.
Für den Bodenradius R, den Behälterdurchmesser D und das Maß S der Außenwölbung besteht dabei vorzugsweise die nachfolgende Beziehung:

| | min | max |
|---|---|---|
| S | 1 mm | D/2 |
| R | 5 mm | D/2 |

Im übrigen ist das Glasinlet nach Fig. 2 analog demjenigen nach Fig. 1 geformt, weswegen auch die gleichen Bezugszeichen verwendet werden.

Anstelle eines Crimprandes können die Glasinlets auch ein DIN-Glasgewinde GL 45 K für einen Schraubverschluß besitzen.

Über den beschriebenen Medizinbereich hinaus können die Glasbehälter auch zur Aufbewahrung von versprühbaren Kosmetikprodukten und zur Aufbewahrung/Aufbereitung von Getränken eingesetzt werden.

So eignet sich das erfindungsgemäße Verfahren auch zum Ummanteln von Glasflaschen für die Herstellung von kohlesäurehaltigem Mineralwasser beim Einbringen von CO₂ in Leitungswasser. Die notwendige Druckbelastbarkeit beträgt dabei 12 bar, was einen Prüfdruck TRG 300 von 18 bar indiziert. Das Volumen der Flaschen kann typischerweise 0,5 bzw. 0,7 und 1,0 Liter betragen.

## Patentansprüche

1. Verschließbarer Glasbehälter, der mit einem Kunststoffüberzug (4) umspritzt ist, **dadurch gekennzeichnet, daß** der Kunststoffüberzug (4) aus mindestens einem reaktiv vernetzendem, thermisch plastifizierbarem Kunststoff besteht und im Wege des Spritzgießens nach der Reaktionsspritzguß-Technik aufgebracht ist.

2. Behälter nach Anspruch 1, ausgebildet als Glasfläschchen, das unter Druck mit einer als Aerosol versprühbaren Substanz und einem Treibmittel befüllbar ist, das ein verjüngtes Halsteil mit einem öffnungsseitig angeformten wulstartigen Abschlußrand (2) zum mechanischen Anbringen eines Abgabeorgans, mit dem die Öffnung des Glasfläschchens verschließbar ist, besitzt, und das von dem Kunststoffüberzug derart umhüllt ist, daß dieser auch den wulstartigen Abschlußrand oder das bereits aufgebrachte Abgabeorgan umfaßt.

3. Behälter nach Anspruch 1 oder 2, **dadurch gekennzeichnet, daß** in dem umspritzten Kunststoffüberzug mehrere, vorzugsweise lochartige Druckausgleichsöffnungen ausgeformt sind.

4. Behälter nach Anspruch 3, **dadurch gekennzeichnet, daß** die Druckausgleichsöffnungen im Mantel des Überzuges des Behälters, vorzugsweise nahe dem Bodenbereich ausgeformt sind.

5. Behälter nach Anspruch 4, **dadurch gekennzeichnet, daß** vier Druckausgleichsöffnungen, paarweise gegenüberliegend, ausgeformt sind.

6. Behälter nach einem der Ansprüche 1 bis 5, **dadurch gekennzeichnet, daß** der Kunststoffüberzug aus einem reaktiven Polyurethan-System besteht.

7. Behälter nach einem der Ansprüche 2 bis 6, **dadurch gekennzeichnet, daß** die Wandstärke des Glasfläschchens im Bereich von 0,7 mm bis 1 mm, und sein Volumen im Bereich von 5 ml bis 125 ml liegt.

8. Behälter nach einem der Ansprüche 2 bis 7, **dadurch gekennzeichnet, daß** die Dicke des Kunststoffüberzuges im Bereich von 1 mm bis 2 mm liegt.

9. Behälter nach einem der Ansprüche 1 bis 8, **dadurch gekennzeichnet, daß** die Dicke des Überzuges über die Behälterhöhe unterschiedlich ist.

10. Behälter nach einem der Ansprüche 1 bis 9, **dadurch gekennzeichnet, daß** der Kunststoffüberzug über die Behälterhöhe aus unterschiedlichen reaktiv vernetzenden Kunststoffen besteht.

11. Behälter nach einem der Ansprüche 1 bis 10, **dadurch gekennzeichnet, daß** der Kunststoffüberzug zumindest in Teilen faserverstärkt ist.

12. Behälter nach einem der Ansprüche 1 bis 11, **dadurch gekennzeichnet, daß** der Kunststoffüberzug über seinen Querschnitt aus unterschiedlichen reaktiv vernetzenden Kunststoffen besteht oder so aufgebracht ist, daß die integrale Dichte über den Querschnitt variiert, jeweils mit der dichteren, festen Schicht als Außenfläche.

13. Behälter nach einem der Ansprüche 1, 6, 9, oder 10 bis 12, **dadurch gekennzeichnet, daß** das Behältervolumen im Bereich > 125 ml und ≤ 500 ml liegt.

14. Behälter nach einem der Ansprüche 1 bis 13, **dadurch gekennzeichnet, daß** der Boden (3) des Behälters nach außen gewölbt ist.

15. Verfahren zum Herstellen des Behälters nach Anspruch 2 oder einem der folgenden, bei dem ein komplettes Glasfläschchen mit Bodenteil (3) zylindrischem Mantelteil (1), verjüngtem Halsteil einschließlich wulstartigem Abschlußrand gemäß konventioneller Glas-Technologie hergestellt wird, **dadurch gekennzeichnet, daß** das komplette Fläschchen in einer Form mit mindestens einem reaktiv vernetzenden, thermisch plastifzierbarem Kunststoff mittels des Reaktionsspritzguß-Verfahrens umspritzt wird.

16. Verfahren nach Anspruch 15, **dadurch gekennzeichnet, daß** als reaktiv vernetzender Kunststoff ein Polyurethan-System verwendet wird.

17. Verfahren nach Anspruch 15 oder 16, **dadurch gekennzeichnet, daß** beim Vorgang des Umspritzens in der Form an unterschiedlichen Stellen unterschiedliche Reaktionsharze und/oder in unterschiedlicher Stärke eingebracht werden.

18. Verfahren nach einem der Ansprüche 15 bis 17, **dadurch gekennzeichnet, daß** das Umspritzen des Fläschchens im unverschlossenen Zustand unter Einschluß des Abschlußrandes (2) erfolgt.

19. Verfahren nach einem der Ansprüche 15 bis 17, **dadurch gekennzeichnet, daß** das Umspritzen des Fläschchens nach Aufsetzen eines Abgabeorgans auf den Abschlußrand (2) unter Einschluß zumindest des Befestigungsteiles des Abgabeorgans erfolgt.

## Claims

1. Closeable glass container comprising a plastic coating (4) applied by injection moulding, **characterized in that** the plastic coating (4) consists of at least one reactively crosslinking plastic which can be plasticized by thermal means and is applied by injection moulding using the reaction injection-moulding technique.

2. Container according to Claim 1, designed as a small glass bottle which can be filled under pressure with a substance which can be sprayed as an aerosol and a propellant, which has a tapered neck section having a bead-like sealing rim (2) formed integrally on the side of the opening for mechanical attachment of a delivery element, by means of which the opening of the small glass bottle can be closed, and which is encased by the plastic coating in such a manner that the latter also surrounds the bead-like sealing rim or the delivery element which has already been fitted.

3. Container according to Claim 1 or 2, **characterized in that** a plurality of pressure-compensating openings, preferably in the form of holes, are formed in the plastic coating applied by injection moulding.

4. Container according to Claim 3, **characterized in that** the pressure-compensating openings are formed in the lateral surface of the coating of the container, preferably in the vicinity of the base region.

5. Container according to Claim 4, **characterized in that** four pressure-compensating openings are formed, lying opposite one another in pairs.

6. Container according to one of Claims 1 to 5, **characterized in that** the plastic coating consists of a reactive polyurethane system.

7. Container according to one of Claims 2 to 6, **characterized in that** the wall thickness of the small glass bottle is in the range from 0.7 mm to 1 mm, and its volume is in the range from 5 ml to 125 ml.

8. Container according to one of Claims 2 to 7, **characterized in that** the thickness of the plastic coating is in the range from 1 mm to 2 mm.

9. Container according to one of Claims 1 to 8, **characterized in that** the thickness of the coating is different over the height of the container.

10. Container according to one of Claims 1 to 9, **characterized in that** the plastic coating consists of different reactively crosslinking plastics over the height of the container.

11. Container according to one of Claims 1 to 10, **characterized in that** the plastic coating is fibre-reinforced, at least in sections.

12. Container according to one of Claims 1 to 11, **characterized in that** the plastic coating consists of different reactively crosslinking plastics over its cross section or is applied in such a way that the integral density varies over the cross section, in each case with the denser, solid layer as the outer surface.

13. Container according to one of Claims 1, 6, 9 or 10 to 12, **characterized in that** the container volume is in the range from > 125 ml to ≤ 500 ml.

14. Container according to one of Claims 1 to 13, **characterized in that** the base (3) of the container bulges outwards.

15. Process for producing the container according to Claim 2 or one of the following claims, in which a complete small glass bottle having base section (3), cylindrical lateral section (1), tapered neck section including bead-like sealing rim is produced using conventional glass technology, **characterized in that** the complete small bottle is surrounded, in a mould, by at least one reactively crosslinking plastic which can be plasticized under the action of heat by means of the reaction injection moulding process.

16. Process according to Claim 15, **characterized in that** the reactively crosslinking plastic used is a polyurethane system.

17. Process according to Claim 15 or 16, **characterized in that** different reaction resins and/or different thicknesses are introduced at different locations in the mould during the injection-moulding process.

18. Process according to one of Claims 15 to 17, **characterized in that** the plastic is injection-moulded around the small bottle when it is in its unclosed state, including the sealing rim (2).

19. Process according to one of Claims 15 to 17, **characterized in that** the injection-moulding around the small bottle takes place after a delivery element has been placed onto the sealing rim (2), including at least the mounting part of the delivery element.

## Revendications

1. Récipient en verre pouvant être fermé, qui est doté d'un enrobage plastique réalisé par extrusion (4), **caractérisé en ce que** l'enrobage plastique (4) se compose d'au moins une matière plastique plastifiable thermiquement et à réticulation réactive et est appliqué au cours du moulage par injection selon la technique de réaction et moulage par injection.

2. Récipient en verre selon la revendication 1, ayant la forme d'un petit flacon de verre, qui peut être rempli sous pression avec une substance à projeter sous forme d'aérosol et d'un agent propulseur, qui possède une partie de col étranglée avec un bord d'extrémité (2) en forme de bourrelet formé du côté de l'ouverture pour le placement mécanique d'un organe de distribution, avec lequel l'ouverture du petit flacon de verre peut être fermée, et qui est enveloppé par l'enrobage plastique de telle façon que celui-ci entoure également le bord d'extrémité en forme de bourrelet ou l'organe de distribution déjà placé.

3. Récipient selon la revendication 1 ou 2, **caractérisé en ce que** plusieurs orifices d'équilibrage de la pression, de préférence en forme de trous, sont formés dans l'enrobage plastique réalisé par extrusion.

4. Récipient selon la revendication 3, **caractérisé en ce que** les orifices d'équilibrage de la pression sont formés dans l'enveloppe de l'enrobage du récipient, de préférence à proximité de la région du fond.

5. Récipient selon la revendication 4, **caractérisé en ce que** l'on a formé quatre orifices d'équilibrage de la pression, qui sont opposés par paires.

6. Récipient selon l'une quelconque des revendications 1 à 5, **caractérisé en ce que** l'enrobage plastique se compose d'un système de polyuréthane réactif.

7. Récipient selon l'une quelconque des revendications 2 à 6, **caractérisé en ce que** l'épaisseur de paroi du petit flacon de verre se situe dans la gamme de 0,7 mm à 1 mm, et son volume dans la gamme de 5 ml à 125 ml.

8. Récipient selon l'une quelconque des revendications 2 à 7, **caractérisé en ce que** l'épaisseur de l'enrobage plastique se situe dans la gamme de 1 mm à 2 mm.

9. Récipient selon l'une quelconque des revendications 1 à 8, **caractérisé en ce que** l'épaisseur de l'enrobage est différente sur la hauteur du récipient.

10. Récipient selon l'une quelconque des revendications 1 à 9, **caractérisé en ce que** l'enrobage plastique se compose de matières plastiques à réticulation réactive différentes sur la hauteur du récipient.

11. Récipient selon l'une quelconque des revendications 1 à 10, **caractérisé en ce que** l'enrobage plastique est renforcé par des fibres au moins dans certaines parties.

12. Récipient selon l'une quelconque des revendications 1 à 11, **caractérisé en ce que** l'enrobage plastique se compose de matières plastiques à réticulation réactive différentes sur sa section transversale ou est appliqué de telle façon que la densité intégrale varie sur la section transversale, chaque fois avec la couche solide plus dense comme face extérieure.

13. Récipient selon l'une quelconque des revendications 1, 6, 9 ou 10 à 12, **caractérisé en ce que** le volume du récipient se situe dans la gamme de > 125 ml à ≤ 500 ml.

14. Récipient selon l'une quelconque des revendications 1 à 13, **caractérisé en ce que** le fond (3) du récipient est bombé vers l'extérieur.

15. Procédé de production du récipient selon la revendication 2 ou l'une quelconque des revendications suivantes, dans lequel on fabrique un petit flacon complet en verre avec une partie de fond (3), une partie d'enveloppe cylindrique (1), une partie de col étranglée y compris un bord d'extrémité en forme de bourrelet selon la technologie conventionnelle du verre, **caractérisé en ce que** l'on enrobe le petit flacon complet dans un moule avec au moins une matière plastique plastifiable thermiquement à réticulation réactive au moyen du procédé de réaction et moulage par injection.

16. Procédé selon la revendication 15, **caractérisé en ce que** l'on utilise un système de polyuréthane comme matière plastique à réticulation réactive.

17. Procédé selon la revendication 15 ou 16, **caractérisé en ce que** l'on place des résines réactives différentes en différents endroits et/ou en épaisseurs différentes dans le moule lors de l'opération d'enrobage.

18. Procédé selon l'une quelconque des revendications 15 à 17, **caractérisé en ce que** l'on effectue l'enrobage du petit flacon à l'état non fermé, y compris du bord d'extrémité (2).

19. Procédé selon l'une quelconque des revendications 15 à 17, **caractérisé en ce que** l'on effectue l'enrobage du petit flacon après le placement d'un organe de distribution sur le bord d'extrémité (2), y compris au moins la partie de fixation de l'organe de distribution.
